# EUROPEAN PATENT APPLICATION

(11) **EP 2 536 103 A1**
(43) Date of publication of application: **19.12.2012**
(21) Application number: 12179287.3
(22) Date of filing: 06.07.2007
(51) Int. Cl.: H04L 29/06

(54) **Retreiving location, assigning a temporary identity and receiving verified information for establishing a (emergency) call**

(30) Priority: 05.07.2007 US 773560; 06.07.2006 US 819276 P; 16.10.2006 US 829663 P; 02.08.2006 US 835369 P
(62) Divisional of application: 07840359.9
(71) Applicant: Qualcomm Incorporated, San Diego, CA 92121 (US)
(72) Inventor: Edge, Stephen, Escondido, CA California 92027 (US); Burroughs, Kirk, Alamo, CA California 94507 (US); Mahendran, Arungundram C., San Diego, CA California 92129 (US); Nasielski, John Wallace, San Diego, CA California 92129 (US)
(74) Representative: Loveless, Ian Mark

(57) **Abstract**

Establish and maintain an IMS emergency call when a UE moves (roams) to a visited network. Receiving at a first network entity (Location and Routing Function, LRF) a request for location of a user equipment, UE, from a second network entity (emergency call session control function, E-CSCF); determining the location of the UE (by seding a retrieve location message from the E-CSCF to the LRF); assigning a temporary identity (i.e. an Emergency Service Query Key, ESQK, or Emergency Service Routing Key, ESRK) for the UE; sending the temporary identity (i.e. ESQK or ESRK) and the location of the UE to the second network entity (E-CSCF); receiving a verified information for the UE from the second network entity (i.e. receiving a SIP re-invite or SIP update message); and associating the verified information with the temporary identity (i.e. ESQK or ESRK) for the UE.

## Description

The present application claims priority to co-pending U.S. Provisional Application Serial No. 60/819,276, entitled "Enhanced Support VoIP E911 Calls," filed July 6, 2006, Serial No. 60/835,369, entitled "Parallel Registration for IMS Emergency Calls," filed August 2, 2006, and Serial No. 60/829,663, entitled "Parallel Registration for IMS Emergency Calls," filed October 16, 2006, all assigned to the assignee hereof and incorporated herein by reference.

### BACKGROUND

### I. Field

The present disclosure relates generally to communication, and more specifically to techniques for originating a call in a communication network.

### II. Background

Wireless communication networks are widely deployed to provide various communication services such as voice, video, packet data, messaging, broadcast, etc. These wireless networks may be multiple-access networks capable of supporting communication for multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

A user equipment (UE) may be invoked by a user to place a voice call with a wireless network, which may or may not be a home network with which the user has service subscription. The UE may go through several phases, such as registration and call establishment, in order to originate the voice call. The UE may register with the wireless network so that the UE can be authenticated to the wireless network and the wireless network can obtain pertinent information such as verified identification information and a verified call back number if the voice call is an emergency call. The UE may then perform call establishment in order to connect the call to an appropriate entity, e.g., a Public Safety Answering Point (PSAP) that can service the emergency call.

Registration may involve exchanges of signaling between various network entities for authentication and other tasks. Call establishment may involve exchanges of signaling between the same and/or different network entities to connect the call. Information obtained from registration (e.g., verified identification information and call back number) may be used for call establishment.

Registration may significantly delay call establishment, especially when the user is roaming since registration in a visited network may involve significant interaction with and within the user's home network. Long delay due to registration may be particularly undesirable for an emergency call. For example, the caller may hang up and retry the emergency call, which may result in the PSAP receiving multiple separate calls for the same emergency service request, the UE attempting a new emergency registration, bad user experience, etc.

To avoid registration delay, the UE may pre-register for emergency calls in a wireless network upon accessing the network. However, this pre-registration may create excessive traffic load and resource usage since many UEs may pre-register but only few UEs may originate emergency calls. Alternatively, registration may be omitted for emergency calls, in which case the UE's identity may not be verified and other information (e.g., a verified call back number) normally obtained during registration may not be available.

There is therefore a need in the art for techniques to enable registration of a UE at the time an emergency call is placed but without significant delay in establishing the emergency call.

### SUMMARY

Techniques for performing registration in parallel with call establishment in order to reduce delay are described herein. The techniques may be used for various types of call and may be particularly advantageous for emergency calls. The techniques enable registration of a UE at the time an emergency call is placed but without incurring significant delay in establishing the emergency call. The techniques may also be employed in some cases to enable registration of a UE at the time a non-emergency call is placed without incurring significant delay in establishing the non-emergency call.

In one design, a UE may perform registration with a communication network, e.g., in response to a user placing a call. The UE may receive an indication of support for parallel registration and call establishment from the communication network. The UE may then establish the call in parallel with performing registration. The UE may update the call with information obtained from the registration, which may comprise verified UE identity information, verified call back information for the UE, etc. The UE may update the call by sending the information toward a called entity/party, e.g., a PSAP selected for an emergency call.

The UE may send a first message to initiate registration, a second message to initiate establishment of the call, and a third message to update the call with the information obtained from the registration. The UE may send the first, second and third messages using a common source Internet Protocol (IP) address and may send the second and third messages using common dialogue information for the call. A network entity handling the call may associate the established call with the registration for the UE based on the common source IP address in the first message and the second and/or third message and the common dialogue information in the second and third messages.

Various aspects and features of the disclosure are described in further detail below.

### BRIEF DESCRIPTION OF THE DRAWINGS

FIG. 1 shows an example network deployment.

FIG. 2 shows a 3GPP network architecture.

FIG. 3 shows a 3GPP2 network architecture.

FIG. 4 shows emergency call origination with sequential registration and call establishment.

FIG. 5 shows emergency call origination with parallel registration and call establishment.

FIG. 6 shows a message flow for an emergency call session with parallel registration and call establishment in 3GPP networks.

FIG. 7 shows a process performed by a UE for call origination with parallel registration and call establishment.

FIGS. 8, 9 and 10 show processes performed by three network entities to support parallel registration and call establishment by the UE.

FIG. 11 shows a block diagram of the UE and various network entities.

### DETAILED DESCRIPTION

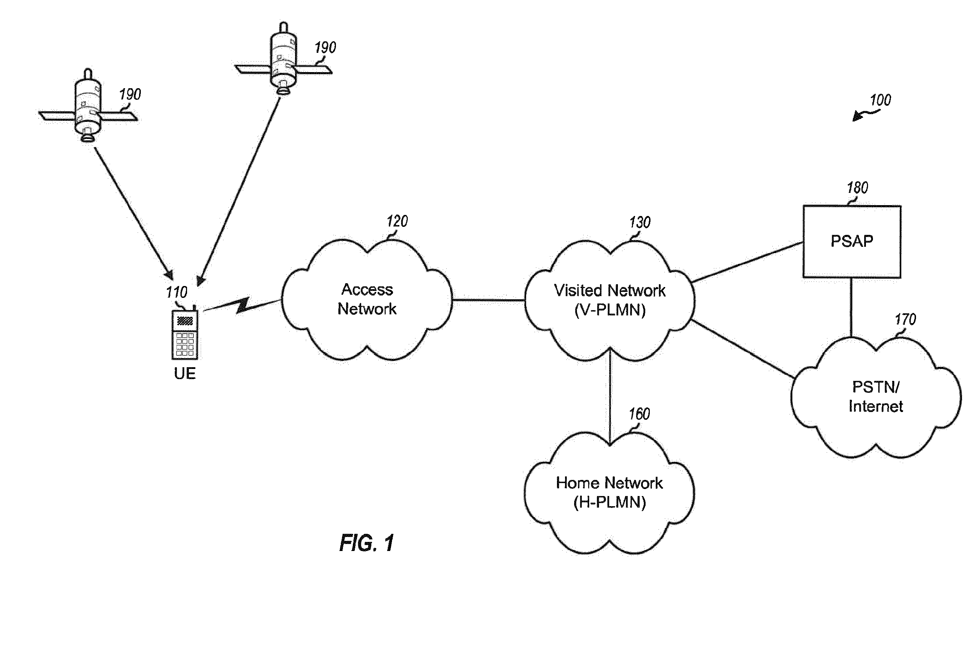

**FIG. 1** shows an example network deployment 100. A UE 110 may communicate with an access network 120 to obtain communication services. UE 110 may be stationary or mobile and may also be referred to as a mobile station, a terminal, a subscriber unit, a station, etc. UE 110 may be a cellular phone, a personal digital assistant (PDA), a wireless device, a wireless modem, a laptop computer, a telemetry device, a tracking device, etc. UE 110 may communicate with one or more base stations and/or one or more access points in access network 120. UE 110 may also receive signals from one or more satellites 190, which may be part of the United States Global Positioning System (GPS), the European Galileo system, the Russian GLONASS system, etc. UE 110 may measure signals from base stations in access network 120 and obtain timing measurements for the base stations. UE 110 may also measure signals from satellites 190 and obtain pseudo-range measurements for the satellites. The pseudo-range measurements and/or timing measurements may be used to derive a position estimate for UE 110. A position estimate is also referred to as a location estimate, a position fix, etc.

Access network 120 provides radio communication for UEs located within its coverage area. Access network 120 may also be referred to as a radio network, a radio access network, etc. Access network 120 may include base stations, access points, network controllers, and/or other entities, as described below. A visited network 130, which may also be referred to as a Visited Public Land Mobile Network (V-PLMN), is a network currently serving UE 110. A home network 160, which may also be referred to as a Home PLMN (H-PLMN), is a network with which UE 110 has subscription. Access network 120 may be associated with visited network 130. Visited network 130 and home network 160 may be the same or different networks and may each comprise various entities that provide data and/or voice connectivity, location services, and/or other functionalities and services.

A network 170 may include a Public Switched Telephone Network (PSTN), the Internet, and/or other voice and data networks. A PSTN supports communication for conventional plain old telephone service (POTS). A PSAP 180 is an entity responsible for answering emergency calls, e.g., for police, fire, and medical services. An emergency call may be initiated when a user dials a fixed well-known number such as 911 in North America or 112 in Europe. PSAP 180 may also be referred to as an Emergency Center (EC).

The techniques described herein may be used for calls originated in wireline networks such as DSL and cable and for calls originated in wireless wide area networks (WWANs), wireless local area networks (WLANs), wireless metropolitan area networks (WMANs), and wireless networks with WWAN and WLAN coverage. The WWANs may be CDMA, TDMA, FDMA, OFDMA, SC-FDMA and/or other networks. A CDMA network may implement a radio technology such as Universal Terrestrial Radio Access (UTRA), cdma2000, etc. UTRA includes Wideband-CDMA (W-CDMA) and Low Chip Rate (LCR). cdma2000 covers IS-2000, IS-95 and IS-856 standards. A TDMA network may implement a radio technology such as Global System for Mobile Communications (GSM), Digital Advanced Mobile Phone System (D-AMPS), etc. UTRA and GSM are described in documents from an organization named "3rd Generation Partnership Project" (3GPP). cdma2000 is described in documents from an organization named "3rd Generation Partnership Project 2" (3GPP2). 3GPP and 3GPP2 documents are publicly available. A WLAN may implement a radio technology such as IEEE 802.11, Hiperlan, etc. A WMAN may implement a radio technology such as IEEE 802.16. These various radio technologies and standards are known in the art.

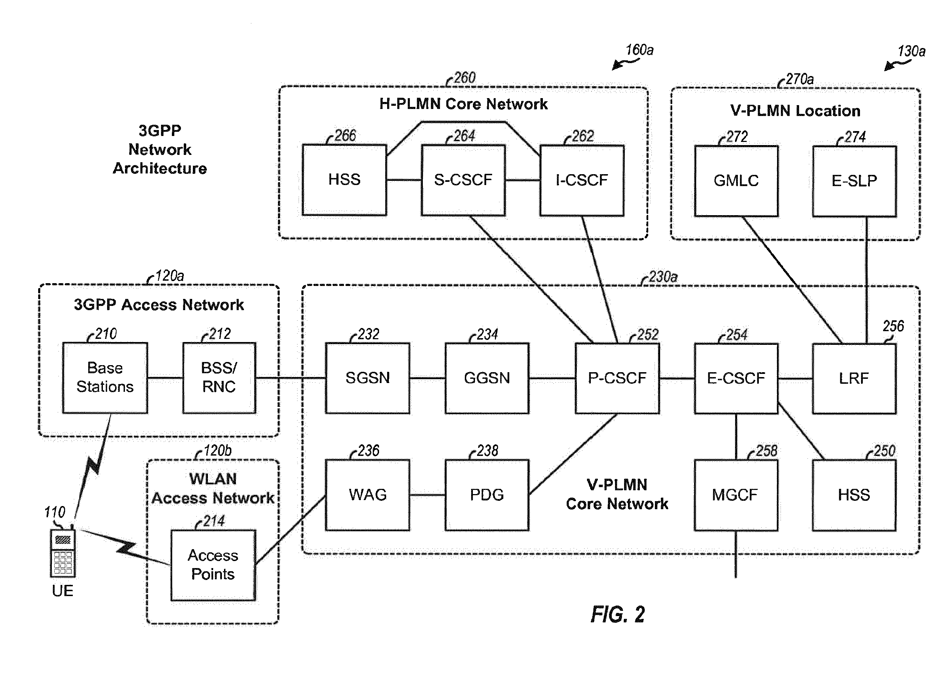

**FIG. 2** shows a 3GPP network architecture. UE 110 may gain radio access via a 3GPP access network 120a or a WLAN access network 120b. 3GPP access network 120a may be a GSM EDGE Radio Access Network (GERAN), a Universal Terrestrial Radio Access Network (UTRAN), an Evolved UTRAN (E-UTRAN), etc. 3GPP access network 120a includes base stations 210, a Base Station Subsystem (BSS)/Radio Network Controller (RNC) 212, and other entities not shown in FIG. 2. A base station may also be referred to as a Node B, an evolved Node B (e-Node B), a base transceiver station (BTS), an access point, etc. WLAN 120b includes access points 214 and may be any WLAN.

A V-PLMN 130a is one example of visited network 130 in FIG. 1 and includes a V-PLMN core network 230a and V-PLMN location entities 270a. V-PLMN core network 230a includes a Serving GPRS Support Node (SGSN) 232, a Gateway GPRS Support Node (GGSN) 234, a WLAN Access Gateway (WAG) 236, and a Packet Data Gateway (PDG) 238. SGSN 232 and GGSN 234 are part of a General Packet Radio Service (GPRS) core network and provide packet-switched services for UEs communicating with 3GPP access network 120a. WAG 236 and PDG 238 are part of a 3GPP Interworking WLAN (I-WLAN) core network and provide packet-switched services for UEs communicating with WLAN 120b.

V-PLMN core network 230a also includes IP Multimedia Subsystem (IMS) entities such as a Proxy Call Session Control Function (P-CSCF) 252, an Emergency CSCF (E-CSCF) 254, and a Media Gateway Control Function (MGCF) 258, which are part of a V-PLMN IMS network. P-CSCF 252, E-CSCF 254 and MGCF 258 support IMS services, e.g., Voice-over-Internet Protocol (VoIP). P-CSCF 252 accepts requests from UEs and services these requests internally or forwards the requests to other entities, possibly after translation. E-CSCF 254 performs session control services for the UEs and maintains session state used to support IMS emergency services. E-CSCF 254 further supports emergency VoIP calls. MGCF 258 directs signaling conversion between SIP/IP and PSTN (e.g., SS7 ISUP) and is used whenever a VoIP call from one user goes to a PSTN user.

V-PLMN core network 230a further includes a Location and Routing Function (LRF) 256 and a Home Subscriber Server (HSS) 250. LRF 256 handles retrieval of routing and location information for UEs, including interim, initial, and updated location information. Interim location is an approximate location used for routing a call. Initial location is a first accurate location for a UE, and updated location is a first or subsequent accurate location for the UE. LRF 256 may interact with a separate location server or may have an integrated location server in order to obtain location information for UEs. HSS 250 stores subscription-related information for UEs for which V-PLMN 130a is the home network.

V-PLMN location entities 270a may include a Gateway Mobile Location Center (GMLC) 272, an Emergency Services SUPL Location Platform (E-SLP) 274, and/or other entities that can provide location services for UEs in communication with V-PLMN 130a. GMLC 272 may be part of 3GPP control plane location system. E-SLP 274 supports Secure User Plane Location (SUPL) from Open Mobile Alliance (OMA).

An H-PLMN 160a is one example of home network 160 in FIG. 1 and includes an H-PLMN core network 260. H-PLMN core network 260 includes an HSS 266 and IMS entities such as an Interrogating CSCF (I-CSCF) 262 and a Serving CSCF (S-CSCF) 264. I-CSCF 262 and S-CSCF 264 are part of an H-PLMN IMS network and support IMS for home network 160.

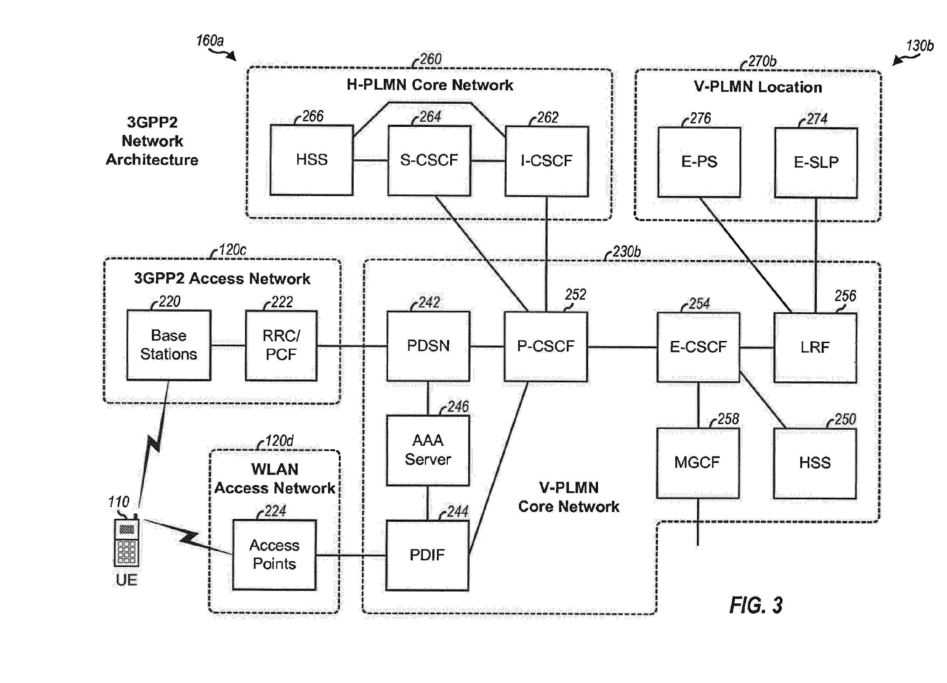

**FIG. 3** shows a 3GPP2 network architecture. UE 110 may gain radio access via a 3GPP2 access network 120c or a WLAN access network 120d. 3GPP2 access network 120c may be a CDMA2000 1X network, a CDMA2000 1xEV-DO network, etc. 3GPP2 access network 120c includes base stations 220, a Radio Resource Control/Packet Control Function (RRC/PCF) 222, and other entities not shown in FIG. 3. RRC may also be called a Radio Network Controller (RNC). WLAN 120d includes access points 224 and may be any WLAN associated with a 3GPP2 network.

A V-PLMN 130b is another example of visited network 130 in FIG. 1 and includes a V-PLMN core network 230b and 3GPP2 location entities 270b. V-PLMN core network 230b includes a Packet Data Serving Node (PDSN) 242, a Packet Data Interworking Function (PDIF) 244, and an Authentication, Authorization and Accounting (AAA) server 246. PDSN 242 and PDIF 244 provide packet-switched services for UEs communicating with 3GPP2 access network 120c and WLAN 120d, respectively. V-PLMN core network 230a also includes IMS or Multimedia Domain (MMD) entities such as P-CSCF 252, E-CSCF 254, and MGCF 258. E-CSCF 254 may also have other names such as ES-AM (Emergency Services Application Manager).

3GPP2 location entities 270b may include E-SLP 272, an Emergency Services Position Server (E-PS) 276, and/or other entities that can provide location services for UEs in communication with V-PLMN 130b.

For simplicity, FIGS. 2 and 3 show only some of the entities in 3GPP and 3GPP2, which may be referred to in the description below. 3GPP and 3GPP2 networks may include other entities defined by 3GPP and 3GPP2, respectively.

Techniques for performing registration in parallel with call establishment are described herein. The techniques may be used for various types of call such as, e.g., voice calls, VoIP calls, emergency calls, emergency VoIP calls, etc. An emergency call is a voice call for emergency services. An emergency VoIP call is an emergency call using VoIP or packet mode. An emergency call may be associated with various characteristics that may be different from an ordinary voice call such as, e.g., obtaining a suitable position estimate for a UE, routing the emergency call to an appropriate PSAP, etc. The techniques may be advantageous for a user roaming in a visited network and may mitigate the penalty of significant delay to authenticate and register the UE in the home network.

For clarity, certain aspects of the techniques are described below for an emergency VoIP call in 3GPP networks. For VoIP, UE 110 typically performs IMS registration with home network 160 via Session Initiation Protocol (SIP) signaling with various IMS entities. SIP is a signaling protocol for initiating, modifying, and terminating IP-based interactive user sessions such as VoIP and is described in RFC 3261, entitled "SIP: Session Initiation Protocol," June 2002, which is publicly available.

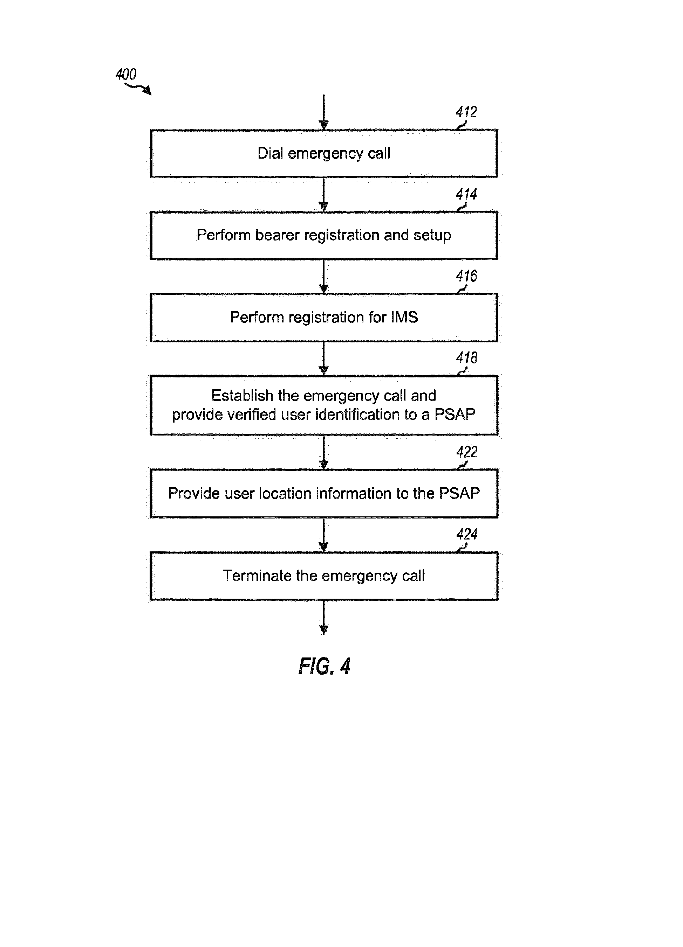

**FIG. 4** shows a process 400 for call origination with sequential registration and call establishment. UE 110 may detect that a user has dialed an emergency call, e.g., "911" in the United States or "112" in Europe (block 412). UE 110 may then verify that sufficient resources and capabilities are available at UE 110 for the emergency call, perform bearer registration and bearer authentication in access network 120 if needed, request necessary resources in visited network 130 (e.g., IP access and IP address), and obtain the address of a SIP server (e.g., P-CSCF 252) in visited network 130 (block 414). Any of the actions in block 414 may be omitted if not needed.

UE 110 may then perform registration for IMS (block 416), which may include the following:
- Authenticate UE 110 to S-CSCF 264 in home network 160,
- Register UE 110 with S-CSCF 264 and HSS 266 in home network 160,
- Provide private and public identities of UE 110 to P-CSCF 252 in visited network 130,
- Establish security association between UE 110 and P-CSCF 252, which may be applied to subsequent messages exchanged between the UE and P-CSCF, and
- Provide to P-CSCF 252 verified identity and call back information (e.g., public user SIP URI and Tel URI) for UE 110.

Registration for IMS may involve extensive interactions among various entities in visited network 130 and home network 160. For example, registration for a roaming situation (e.g., as defined in 3GPP TS 33.203) may involve two sets of message exchanges between the visited and home networks - one set to initiate an authentication challenge and another set to respond to the challenge and complete the registration. Each set of message exchanges involves signaling between and processing by various entities, e.g., P-CSCF 252 and UE 110 in visited network 130 and I-CSCF 262, S-CSCF 264 and HSS 266 in home network 160. Registration may thus take a significant amount of time, e.g., on the order of seconds.

After completing registration, UE 110 may perform call establishment for the emergency call (block 418). Call establishment may include the following:
- Send a SIP INVITE from UE 110 to P-CSCF 252 to initiate the emergency call,
- Forward the SIP INVITE from P-CSCF 252 to E-CSCF 254,
- Send a request for location and/or routing information from E-CSCF 254 to LRF 256,
- Obtain an interim location of UE 110,
- Select a suitable PSAP for UE 110 based on the interim UE location, and
- Establish an emergency call with the selected PSAP and provide verified UE identification to the selected PSAP, e.g., PSAP 180.
Call establishment may involve extensive interactions among various entities in visited network 130. Call establishment may thus take a significant amount of time.

Registration and call establishment for an IMS emergency call in 3GPP are described in 3GPP TS 23.167, entitled "IP Multimedia Subsystem (IMS) emergency sessions," June 2007, which is publicly available.

After the emergency call has been established, location information for UE 110 may be obtained and provided to PSAP 180 (block 422). UE 110 may communicate with PSAP 180 for the emergency call and may terminate the call at any time (block 424).

In process 400, registration and call establishment are performed sequentially, with call establishment being started only after registration is completed, as defined in 3GPP TS 23.167. For an emergency VoIP call, UE 110 would typically not have registered in visited network 130 before the call was dialed because VoIP services are often provided from home network 160 in roaming situations (in contrast to circuit-mode calls where visited network 130 typically provides support). The registration in visited network 130 allows UE 110 to be authenticated to P-CSCF 252 in visited network 130. The registration also allows a verified UE identity and/or a verified call back number to be obtained for UE 110. PSAP 180 may use the verified call back number to call back UE 110 in case the call is dropped, e.g., due to temporary loss of radio contact or movement of the user to another network. Without authentication, fraud and spoofing may be possible, and it may not be possible to confidently and correctly identify UE 110. Without a verified call back number, it may not be possible to call back UE 110. Thus, it may be desirable to perform registration. However, the emergency call may be delayed while waiting for registration to complete.

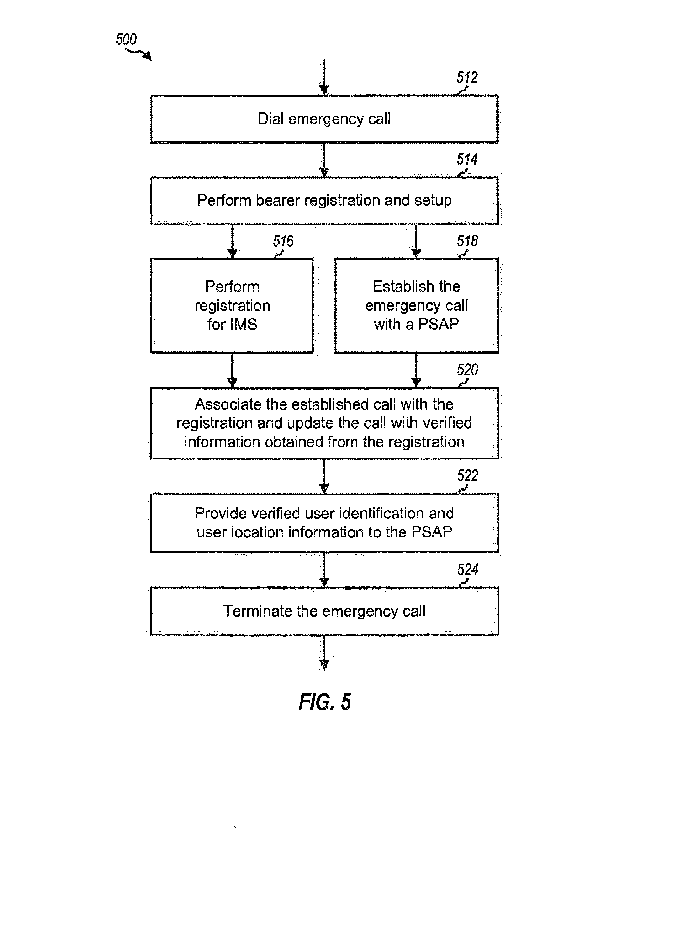

**FIG. 5** shows a process 500 for call origination with parallel registration and call establishment. UE 110 may detect that a user has dialed an emergency call (block 512). UE 110 may then perform bearer registration and setup as described above for FIG. 4 (block 514).

UE 110 may then start registration for IMS, which may include the tasks described above for FIG. 4 (block 516). Concurrent with registration, UE 110 may perform call establishment for the emergency call (block 518). UE 110 may exchange signaling with a first set of network entities for registration and may exchange signaling with a second set of network entities for call establishment. The first and second sets may include common network entities, e.g., P-CSCF 252 in visited network 130. The network entities in each set may or may not be aware of the association between the registration and the call establishment, e.g., their concurrency and their association with the same UE 110. The registration and call establishment for UE 110 may be considered as two separate transactions.

At an appropriate time, the established call may be associated with the registration, e.g., at P-CSCF 252 and/or other network entities (block 520). Signaling may be exchanged to provide verified UE identification obtained from the registration and UE location information to the selected PSAP, e.g., PSAP 180 (block 522). UE 110 may then communicate with PSAP 180 for the emergency call and may terminate the call at any time (block 524).

In general, registration and call establishment may each be performed with any set of signaling messages between any set of network entities. Different sets of network entities may be involved in different wireless networks such as 3GPP networks and 3GPP2 networks. Registration and call establishment may also be performed in parallel in various manners.

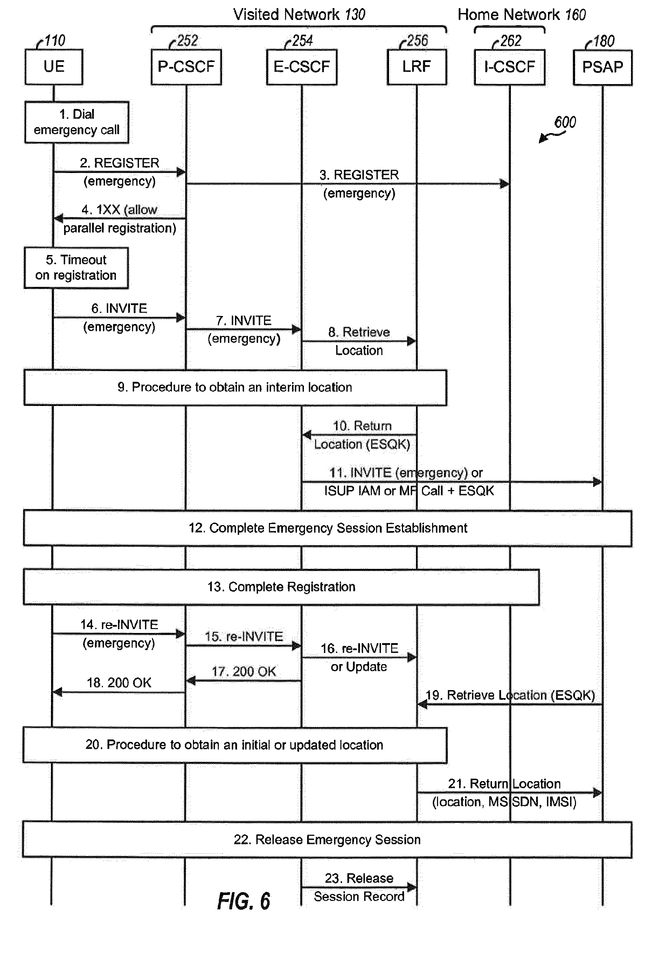

**FIG. 6** shows a design of a message flow 600 for an emergency call session with parallel registration and call establishment in 3GPP and 3GPP2 networks. Message flow 600 may be used when UE 110 is roaming in visited network 130 or when UE 110 is in home network 160 but registration is yet not performed.

A user may initiate an emergency call, e.g., by dialing "911" in the United States or "112" in Europe (step 1). UE 110 may select VoIP for the emergency call if the UE is currently using packet mode or is aware of the availability of packet mode. UE 110 may start registration by sending a SIP REGISTER message to P-CSCF 252 in visited network 130 (step 2). The SIP REGISTER message may include an indication of an emergency call and identification information for UE 110, e.g., a public emergency Uniform Resource Identifier (URI). P-CSCF 252 may forward the SIP REGISTER message to I-CSCF 262 in home network 160 (step 3). P-CSCF 252 may also return to UE 110 a SIP 1XX message (e.g., a SIP 100 Trying message) with an indication that parallel registration is supported (step 4). The registration may continue in step 12, which may occur in parallel to other steps for call establishment.

UE 110 may determine that registration is not completed (step 5). UE 110 may start a timer when the SIP REGISTER message is sent in step 2 and may determine that the timer has exceeded a threshold. The threshold may correspond to the amount of time to wait before starting call establishment in parallel with registration and may be set to zero (so that call establishment can be started immediately) or to some other suitable value.

UE 110 may start call establishment in parallel with registration by sending a SIP INVITE message to P-CSCF 252 (step 6). The SIP INVITE message may include an indication of an emergency call, an indication that registration is pending, an indication of an anonymous emergency call request, unverified identification information for UE 110, location information for UE 110, etc. An anonymous emergency call is an emergency call in which the identity of the caller is not known. An anonymous emergency call may be used for parallel call establishment since registration is not yet completed and a verified UE identity is not yet available. The unverified identification information may comprise an International Mobile Equipment Identity (IMEI), an Electronic Serial Number (ESN), a Mobile Equipment Identifier (MEID), an IP address, etc. IMEI is a number that is unique for every UE in 3GPP and may be used to identify the UE (but not the user). ESN/MEID is a number that is unique for every UE in 3GPP2 and may be used to identify the UE (but not the user). The location information may comprise a position estimate for UE 110, the identity of a serving cell for UE 110, etc., and may be included in the SIP INVITE message if available. The location information may be used to select an appropriate PSAP for the emergency call.

P-CSCF 252 may receive the SIP INVITE message for call establishment in step 6 and the SIP REGISTER message for registration in step 2 from UE 110. P-CSCF 252 may associate the SIP INVITE message with the SIP REGISTER message, which may simplify subsequent actions. Alternatively, P-CSCF 252 may perform registration and call establishment for UE 110 as two separate unassociated transactions, which may simplify P-CSCF operation. In any case, P-CSCF 252 may forward the SIP INVITE message to E-CSCF 254 (step 7). E-CSCF 254 may request location information and/or routing information for UE 110 from LRF 256, e.g., if location information is not included in the SIP INVITE message (step 8). In this case, E-CSCF 254 may provide the information received in the SIP INVITE message (e.g., the IMEI or ESN) to LRF 256 and may indicate to the LRF that registration is pending for UE 110.

LRF 256 may obtain and/or verify an interim location of UE 110 and may instigate a positioning procedure to obtain the interim UE location, if necessary (step 9). For example, LRF 256 may use procedures defined in 3GPP TS 23.271 for control plane location or procedures defined by OMA for SUPL. LRF 256 may also determine an address for a PSAP selected for the emergency call, which is PSAP 180, e.g., by invoking a Routing Determination Function (RDF) to convert the interim location obtained in step 9 or location information received in step 8 into the PSAP address. LRF 256 may store a record of all information obtained for UE 110 including the information received in step 8.

LRF 256 may return the requested location information and/or routing information as well as correlation information to E-CSCF 254 (step 10). The routing information may comprise the PSAP address and/or other information related to PSAP 180. The correlation information may identify LRF 256 and the call record for the emergency call stored in LRF 256 and may be used later to access the call record for UE 110. The correlation information may be used by PSAP 180 to later request UE location information from LRF 256. With parallel registration and call establishment, the correlation information may also be used to obtain verified UE identification and call back information from LRF 256. The correlation information may comprise an Emergency Service Query Key (ESQK), an Emergency Services Routing Key (ESRK), or some other information. The ESQK and ESRK may be telephone numbers, e.g., 10 digit telephone numbers in the US, which may be used to identify UE 110 and LRF 256 for the emergency call. For example, each LRF may allocate ESRKs and/or ESQKs from a different unique range of numbers, which may then allow PSAP 180 to determine the LRF based on the number range for a particular ESQK or ESRK. The return of the correlation information may be triggered by the indication that registration for UE 110 is pending. Alternatively, the correlation information may always be provided as a matter of V-PLMN policy. If LRF 256 is not invoked, then steps 8 through 10 may be skipped.

E-CSCF 254 may also determine the PSAP address and correlation information if these items are not received from LRF 256 in steps 8 through 10. In any case, E-CSCF 254 may route the emergency call to PSAP 180, e.g., via MGCF 258 for a PSTN-capable PSAP or directly using IP for an IP-capable PSAP (step 11). E-CSCF 254 may include the correlation information (e.g., the ESQK or ESRK) received in step 10. E-CSCF 254 may omit the UE identification and call back number at this point since the emergency call is treated as an anonymous call until the UE identity is verified.

If registration is completed prior to step 7, then P-CSCF 252 may include verified UE identity and/or call back information in the SIP INVITE message sent to E-CSCF 254 in step 7. In this case, E-CSCF 254 may include the verified UE identity and/or call back information in the call request (e.g., a SIP INVITE or ISUP IAM) sent to PSAP 180 in step 11. PSAP 180 would then know the UE identity and/or call back number upon receiving the call request. If registration is not completed prior to step 7, then the verified UE identity and/or call back information may be provided to P-CSCF 252, E-CSCF 254, and PSAP 180 at a later time when the information becomes available.

The remainder of call establishment may be completed (step 12). The remainder of registration may also be completed (step 13). Step 13 may occur in parallel with steps 6 through 12 for call establishment. The registration in step 13 may provide the verified UE identity and/or call back information for UE 110. The verified UE identity information may comprise a Mobile Subscriber IDSN Number (MSIDSN), an International Mobile Subscriber Identity (IMSI), Mobile Identification Number (MIN), a public user SIP Uniform Resource Identifier (URI), etc. The verified call back information may comprise the MSIDSN, the public user SIP URI, a call back Tel URI, a Mobile Directory Number (MDN), an IETF URI, an IETF Globally Routable User Agent URI (GRUU), an IP address, a Mobile IP address (e.g., IPv4 or IPv6), etc. A Tel URI is a URI that may be used to represent resources identified by telephone numbers and may contain an MSISDN or MDN. A SIP URI is a SIP identity of the form "sip:user@domain".

If registration is completed prior to call establishment, then UE 110 may send to P-CSCF 252 a SIP UPDATE message containing the verified UE identity and call back information obtained from or verified by the completed registration, prior to completing the call establishment, so that P-CSCF 252 can have this information earlier.

The registration in step 13 may establish a security association between UE 110 and P-CSCF 252, e.g., an association using secure IP (IPsec) or Transport Layer Security (TLS), as described in 3GPP TS 33.203. In this case, after registration is completed in step 13, any further signaling between UE 110 and P-CSCF 252 to complete call establishment in step 12 as well as subsequent messages may be transferred using the security association established by the completed registration. This would enable ciphering and/or authentication of each signaling message.

After completing both registration and call establishment, and provided a SIP UPDATE message containing verified UE identity and call back information was not already sent, UE 110 may send a SIP re-INVITE message to P-CSCF 252 to update information for the established emergency call (step 14). The SIP re-INVITE message may be sent in a verifiable manner using any security association established during the registration. The SIP re-INVITE message includes the same dialog information (e.g., same call-ID and To: and From: tags) included in the INVITE message sent in step 6 so that P-CSCF 252 can ascertain that the SIP re-INVITE message is to modify an existing session instead of establishing a new session. The SIP re-INVITE message may include an emergency indication, UE identity information, call back information, etc. UE 110 may also use a SIP UPDATE message instead of a SIP re-INVITE message to update the identity and callback information. The following description assumes the use of a SIP re-INVITE message instead of a SIP UPDATE message.

P-CSCF 252 may associate the SIP re-INVITE message received in step 14 with the registration completed in step 13, e.g., based on the use of the security association established during the completed registration to send the SIP re-INVITE message. P-CSCF 252 may also associate the SIP re-INVITE message with the call establishment started by the SIP INVITE message in step 6 and completed in step 12. This association may be based on the use of common dialogue information (e.g., the same SIP dialogue parameters such as call-ID and To: and From: tags) and common source IP address for both the SIP INVITE message in step 6 and the SIP re-INVITE message in step 14. At this point, P-CSCF 252 may have associated the registration and call establishment for UE 110. P-CSCF 252 may verify the UE identity and call back information in the SIP re-INVITE message received from UE 110 based on information received from home network 160 during registration and may insert any missing or incorrect information.

P-CSCF 252 may then forward the SIP re-INVITE message to E-CSCF 254 (step 15). E-CSCF 254 may treat the SIP re-INVITE message as providing verified UE identity and call back information for the SIP INVITE message received earlier in step 7. If LRF 256 was queried earlier in step 8, then E-CSCF 254 may forward the SIP re-INVITE message to LRF 256 or may provide some other type of update containing the verified UE identity and call back information to LRF 256 (step 16). E-CSCF 254 may return a SIP 200 OK message to P-CSCF 252 for the SIP re-INVITE message (step 17). P-CSCF 254 may return a SIP 200 OK message to UE 110 (step 18).

PSAP 180 may need to know the location of UE 110 but may not receive an accurate UE location in step 11. PSAP 180 may then send a location request for an initial location or an updated location of UE 110, e.g., after the call establishment is complete in step 12 (step 19). The location request may be sent to LRF 256 if steps 8 to 10 were performed or to E-CSCF 254 if steps 8 to 10 were not performed. PSAP 180 may determine LRF 256 or E-CSCF 254 based on the correlation information received in step 11 and may include the correlation information in the location request. If the location request is sent to LRF 256, then LRF 256 may instigate a positioning procedure in 3GPP control plane, OMA SUPL, etc., to obtain an accurate UE location (step 20).

LRF 256 or E-CSCF 254 may return the initial or updated location of UE 110 to PSAP 180 (step 21). LRF 256 or E-CSCF 254 may also include the verified UE identity and call back information received in step 15 or 16. PSAP 180 may now have information that was missing (not sent to PSAP 180) during call establishment in step 12. This delayed provision of UE information is supported by ANSI STANDARD J-STD-036-B in the United States and by OMA Mobile Location Protocol (MLP) elsewhere. The delayed provision of UE information was originally defined to support emergency call establishment where signaling limitations (e.g., on Multi Frequency (MF) trunks) prevented the transfer of all UE information to the PSAP during call establishment but may be exploited and used here to support the case where registration limitations have the same effect. If registration fails or is not completed in time so that verified information is not provided to E-CSCF 254 in step 15 and to LRF 256 in step 16, then E-CSCF 254 or LRF 256 may provide the UE's IMEI or ESN to PSAP 180 and an indication that call back is not possible. This may be accomplished by including a non-dialable call back number containing digits from the IMEI or ESN if the interface between LRF 256 and PSAP 180 is based on J-STD-036 in the United States or OMA MLP elsewhere. In any case, PSAP 180 may obtain all pertinent information for the emergency call for UE 110 after step 21.

UE 110 may thereafter communicate with PSAP 180 for the emergency call. At some point, the emergency call is released (step 22). If steps 8 to 10 were performed, then E-CSCF 254 may indicate to LRF 256 that the emergency call is released (step 23), and LRF 256 may release any record stored in step 9.

Referring back to FIG. 5, block 516 for registration may include steps 2, 3, 4 and 13 in FIG. 6. Block 518 for call establishment may include steps 6 to 12 in FIG. 6. Block 520 for call association may include steps 14 to 18 in FIG. 6, and block 522 may include steps 19 to 21 in FIG. 6. Each step in FIG. 6 may involve exchange of one or more signaling messages and/or other actions.

A main purpose of registration is to authenticate the identity of UE 110 and any call back information and to provide verified UE identity and call back information to PSAP 180. Three procedures in FIG. 6 are involved in the authentication and provision of the UE identity and call back information:
(a) UE registration in steps 2, 3, 4 and 13,
(b) Anonymous call establishment in steps 6 to 12, and
(c) Provision of verified UE identity and call back information in steps 14 to 21.

Invocation of procedure (c) after procedure (a) has completed means that P-CSCF 252 and E-CSCF 254 can be sure that the same UE 110 is involved in both procedures (a) and (c). For example, UE 110 may be involved in procedure (a); another UE could then not spoof procedure (c) if procedure (a) generated a security association between UE 110 and P-CSCF 252 since the other UE would not be able to support the identical security association. This means that any spoofing will be limited to either procedure (b) or procedures (a) and (c) but not to any other combination of these procedures. If it is assumed that the UE involved in procedure (b) is also the UE involved in procedures (a) and (c) (i.e., that there is no spoofing), then the correct UE identity and call back information will be obtained in procedure (c).

If there is an attempt at spoofing, then it may be possible that a UE *x* involved in procedure (b) might not be a UE *y* involved in procedures (a) and (c). Two possibilities may arise in this case. UE *x* may be the spoofer and, after observing in some way the registration in procedure (a), UE *x* may instigate the anonymous call establishment in procedure (b). If this occurs, then there can be no association of procedure (b) with either procedure (a) or (c) because the SIP re-INVITE message sent in procedure (c) will not contain the same SIP dialogue parameters as the SIP INVITE message sent in procedure (b). Hence, the spoofing attempt will fail. Alternatively, UE *y* may be the spoofer and, after observing the anonymous call establishment in procedure (b) in some way, may instigate procedure (a) followed by procedure (c). In this case, UE *y* can provide the same SIP dialogue parameters in procedure (c) as in procedure (b) and may thus be able to mislead P-CSCF 252 and E-CSCF 254 into believing that the SIP INVITE message in procedure (b) and the SIP re-INVITE message in procedure (c) are from the same UE. However, UE *y* may be forced to provide its own identity and call back information in procedure (c), because procedure (c) only accepts authenticated identity and call back information, which makes this scenario very unattractive to any spoofer who wishes to remain undetected. To help further prevent this case, P-CSCF 252 can verify that the source IP address for UE *x* in procedure (b) matches the source IP address for UE *y* in procedure (c). P-CSCF 252 can assume (i) two different UEs and thus a spoofing attempt if the source IP addresses do not match or (ii) the same UE and thus no spoofing if the source IP addresses match. This verification should be reliable if access networks, e.g. access network 120, authenticate source IP addresses.

If completion of registration in step 13 takes significant time, then LRF 256, or E-CSCF 254 if steps 8 to 10 are not executed, may receive the location request from PSAP 180 in step 19 before receiving the verified UE identity and call back information in step 16 or step 15. In this case, LRF 256, or E-CSCF 254 if steps 8 to 10 are not executed, may wait until it receives the verified information before responding to PSAP 180 with the requested location information and the verified UE identity and call back information in step 21. Such a delayed response from LRF 256 or E-CSCF 254 may be permitted if visited network 130 is allowed (e.g., by local or national emergency call regulations) to take significant time (e.g., 30 seconds) to obtain accurate UE location information. In this case, PSAP 180 may tolerate a long delay in the response from LRF 256 or E-CSCF 254 in step 21. Alternatively, while LRF 256 is waiting to receive the verified UE identity and call back information in step 16, LRF 256 may proceed to obtain the UE location in step 20. Once LRF 256 has both the UE location in step 20 and the verified UE identity and call back information in step 16, or once E-CSCF 254 has the verified UE identity and call back information in step 15 if steps 8 to 10 are not executed, LRF 256 or E-CSCF 254 may respond to PSAP 180 in step 21.

If LRF 256 has already received the verified UE identity and call back information from E-CSCF 254 when the location request is received from PSAP 180, then LRF 256 may return the verified information to PSAP 180 in step 21 without obtaining the UE location in step 20 or without waiting for step 20 to complete if instigated by LRF 256 prior to step 19. In this case, PSAP 180 can receive the verified UE identity and call back information earlier, which may be useful if call back is needed, e.g., if the emergency call was dropped due to temporary poor radio coverage.

LRF 256, or E-CSCF 254 if steps 8 to 10 are not executed, may also send the verified UE identity and call back information received in step 16 or step 15, possibly with location information if available, to PSAP 180 without waiting for the location request in step 19. In this case, LRF 256 or E-CSCF 254 may include the correlation information (e.g., the ESRK or ESQK assigned possibly in step 10) to enable PSAP 180 to associate the verified UE identity and call back information with the call establishment in steps 11 and 12.

FIG. 6 shows an example message flow. Parallel registration and call establishment may also be performed in other manners and/or with other network entities. For example, P-CSCF 252 may transfer the verified UE identity and call back information directly to LRF 256 and not via E-CSCF 254.

In another design, P-CSCF 252 rather than E-CSCF 254 may interface with LRF 256. P-CSCF 252 may send the request for routing and location information to LRF 256 following step 6 and in place of step 8. LRF 256 may then perform step 9 and return the routing and/or location information to P-CSCF 252 in place of step 10. P-CSCF 252 may then send the SIP INVITE message to E-CSCF 254 in step 7 and may include the PSAP routing information received from LRF 256. E-CSCF 254 would then not interact with LRF 256 in steps 8 and 10 but may instead route the call to PSAP 180 in step 11. P-CSCF 252 may send the verified UE identity and call back information directly to LRF 256 following step 14 and as a replacement for steps 15 and 16.

In another design, LRF 256 may be part of (e.g., a logical function within) P-CSCF 252 or E-CSCF 254. In this design, transfer of the verified UE identity and call back information in step 15 and/or 16, request for and return of routing and location information (e.g., in steps 8 and 10) and indication of call release (e.g., in step 23) may be performed using internal messages or other indications. In yet another design, the signaling interface between E-CSCF 254 and LRF 256 may be based on SIP signaling, and the SIP INVITE message received by E-CSCF 254 in step 7 may be forwarded to LRF 256 in step 8. LRF 256 may then (a) return the SIP INVITE message containing the address of PSAP 180 obtained in step 9 to E-CSCF 254 or (b) forward the SIP INVITE message directly to PSAP 180 following step 9 and in place of steps 10 and 11. The verified UE identity and call back information may still be transferred to LRF 256 later in steps 15 and 16 but the transfer in step 16 may employ SIP related signaling.

In another design, UE 110 may provide UE identity and/or call back information in step 6, which may be transferred to PSAP 180 in steps 7 and 11. If SS7 ISUP signaling is used from MGCF 258 to access PSAP 180 via PSTN 170, then a screening indicator parameter field of a calling party number may include an indication that this number is "user provided, not screened". This indication would inform PSAP 180 that the number is not verified by visited network 130 and thus not completely trustworthy. PSAP 180 may still use the number to attempt call back, which may be useful if the emergency call is dropped before PSAP 180 can receive the verified UE identity and call back information in step 21. PSAP 180 may receive the verified information in step 21, which may or may not match the unverified information obtained in step 11.

In another design, P-CSCF 252 may provide the verified UE identity and call back information in step 15 without the need for UE 110 to instigate this in step 14. P-CSCF 252 may first ensure that UE 110 sent both the SIP REGISTER message in step 2 and the SIP INVITE message in step 6.

In another design, the indication to allow parallel registration may be provided to UE 110 in ways other than through SIP signaling in step 4. For example, the indication may be provided in broadcast information sent by visited network 130 to all UEs served by visited network 130 or may be provided by home network 160, e.g., through information already configured in UE 110 or previously downloaded to UE 110.

The process shown in FIG. 6 may be transparent to both home network 160 and PSAP 180 because the procedures for emergency registration, emergency call establishment, and retrieval of an initial or updated location estimate may not be impacted by performing registration and call establishment in parallel. From the perspective of home network 160 and PSAP 180, emergency registration, emergency call establishment, and retrieval of an initial or updated location estimate can occur using existing signaling procedures, e.g., the signaling procedures defined in ANSI J-STD-036 or OMA MLP for PSAP 180 and the procedures defined in either 3GPP TS 23.167, 3GPP TS 24.229, 3GPP TS 33.203, and 3GPP TS 23.228 or 3GPP2 X.P0049 and 3GPP2 X.P0013 for home network 160. ANSI J-STD-036, which is used for PSAPs located in the United States, allows caller information to be transferred along with location information after the emergency call has been established. Hence, no changes to ANSI J-STD-036 or PSAPs are needed to support parallel registration and call establishment. OMA/LIF MLP is currently specified in ETSI TS 102 164 as the PSAP interface protocol to support circuit-mode E112 calls for PSAPs located in Europe. TS 102 164 defines sending the caller MSISDN during call establishment (e.g., in an ISUP IAM) and using a restricted subset of MLP to deliver location information but not additional caller information. However, since MLP was developed to support the ESRK concept used in the United States, it would be possible to expand the usage of MLP (without impacting MLP itself) to enable delayed delivery of the caller identity and call back information.

If visited network 130 does not support parallel registration and call establishment or if PSAP 180 does not support delayed transfer of caller identity and call back information (e.g., if PSAP 180 does not support retrieval of location information), then P-CSCF 252 may omit the indication that parallel registration is supported in the 1XX message sent to UE 110 step 4. Hence, there may be no impact to any visited network that does not to support parallel registration and call establishment.

Parallel registration and call establishment may reduce call establishment delay, which may be highly desirable for an emergency call. Call establishment delay may be reduced even more by forgoing authentication at the access network level (e.g., to obtain GPRS access or I-WLAN access) and performing authentication only at IMS level using either normal registration or parallel registration as described herein. Access level authentication may be avoided using the procedures already defined and being defined in 3GPP TS 23.167, 3GPP TS 23.060, and 3GPP TS 23.234 to support unauthenticated emergency access. Skipping access level authentication may be particularly advantageous for emergency calls instigated immediately after power on where there may be significant delay in establishing a call.

For clarity, the techniques have been described for 3GPP and 3GPP2 networks. The techniques may also be used for other networks. In such cases, P-CSCF 252, E-CSCF 254, and LRF 256 may be supported in a visited network by similar or identical entities, which may be physically separate or combined as described above for a 3GPP or 3GPP2 visited network. The UE identity and call back information obtained and/or verified during registration may be the same as or different from the UE identify and call back information described above for a 3GPP or 3GPP2 network.

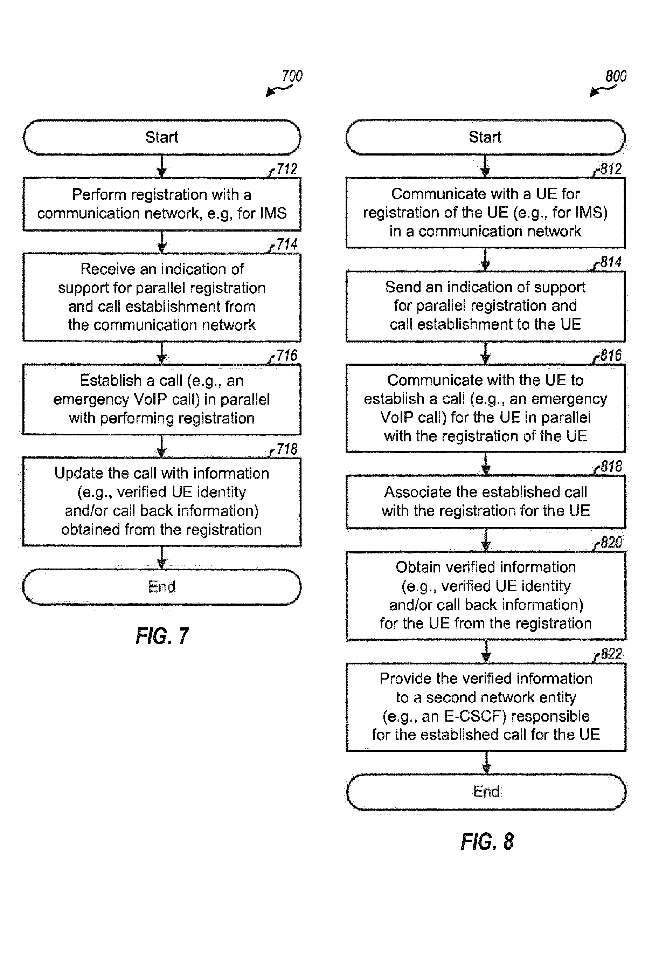

**FIG. 7** shows a design of a process 700 performed by a UE for call origination with parallel registration and call establishment. The UE may perform registration with a communication network, e.g., in response to a user dialing a call (block 712). The communication network may be a visited network, and the UE may perform registration with a home network via the visited network with authentication of the UE to the visited network. The UE may receive an indication of support for parallel registration and call establishment from the communication network (block 714). The UE may establish the call in parallel with performing registration, e.g., establish an emergency call using a public identity for the UE (block 716). For example, the UE may perform registration for IMS and may establish a VoIP call in parallel with performing registration for IMS.

The UE may update the call with information obtained from the registration, e.g., by sending the information toward a called entity/party such as a PSAP (block 718). The information obtained from the registration may comprise verified UE identity information, verified call back information for the UE, etc.

The UE may send a first message (e.g., a SIP REGISTER message) to initiate registration, a second message (e.g., a SIP INVITE message) to initiate establishment of the call, and a third message (e.g., a SIP re-INVITE message or a SIP UPDATE message) to update the call with the information obtained from the registration. The UE may send the first, second and third messages based on a common source IP address and may send the second and third messages based on common dialogue information for the call. The UE may instigate association of the established call with the registration by a network entity (e.g., a P-CSCF) handling the call. This association instigation may be achieved by sending the third message.

**FIG. 8** shows a design of a process 800 performed by a network entity such as a P-CSCF to support parallel registration and call establishment by a UE. The network entity may communicate with the UE for registration of the UE (e.g., for IMS) in a communication network (block 812). The network entity may communicate with the UE's home network to register and authenticate the UE. The network entity may send an indication of support for parallel registration and call establishment to the UE (block 814). The network entity may communicate with the UE to establish a call (e.g., an emergency VoIP call) for the UE in parallel with the registration of the UE (block 816).

The network entity may associate the established call with the registration for the UE (block 818). The network entity may receive from the UE a first message (e.g., a SIP REGISTER message) to initiate registration, a second message (e.g., a SIP INVITE message) to initiate establishment of the call, and a third message (e.g., a SIP re-INVITE message) to update the established call. The network entity may associate the established call with the registration based on a common source IP address in the first message and the second and/or third message, common dialogue information in the second and third messages, use of a security association established during registration for the third message, etc.

The network entity may obtain verified information (e.g., verified UE identity and/or call back information) for the UE from the registration (block 820). The network entity may provide the verified information to a second network entity (e.g., an E-CSCF) responsible for the established call for the UE (block 822).

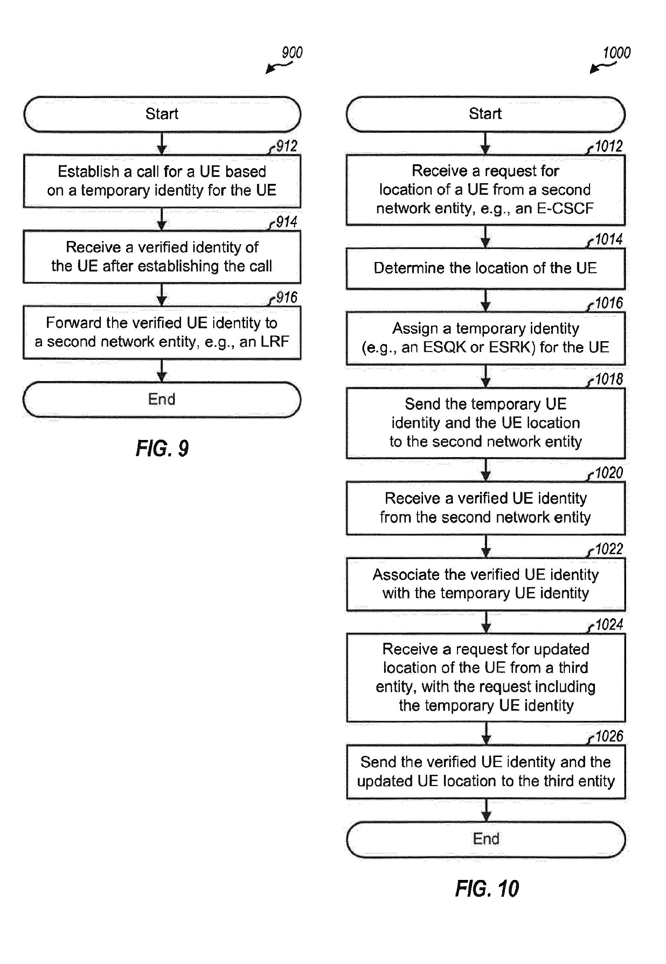

**FIG. 9** shows a design of a process 900 performed by a network entity such as an E-CSCF to support parallel registration and call establishment by a UE. The network entity may establish a call for the UE based on a temporary identity for the UE (block 912). The call may be an emergency call, and the temporary UE identity may comprise an ESQK or an ESRK. The network entity may receive a verified UE identity after establishing the call (block 914). The network entity may then forward the verified UE identity to a second network entity, e.g., an LRF (block 916).

The network entity may receive a first message (e.g., a SIP INVITE message) to initiate establishment of the call and may establish the call for the UE based on the first message. The network entity may thereafter receive a second message (e.g., a SIP re-INVITE message) with the verified UE identity and may associate the verified UE identity with the established call based on common dialogue information in the first and second messages.

**FIG. 10** shows a design of a process 1000 performed by a network entity such as an LRF to support parallel registration and call establishment by a UE. The network entity may receive a request for location of the UE from a second network entity, e.g., an E-CSCF (block 1012). The network entity may determine the location of the UE (block 1014) and may assign a temporary identity (e.g., an ESQK or ESRK) for the UE (block 1016). The network entity may then send the temporary UE identity and the UE location to the second network entity (block 1018). The network entity may thereafter receive a verified UE identity from the second network entity (block 1020) and may associate the verified UE identity with the temporary UE identity (block 1022). The network entity may receive a request for updated location of the UE from a third entity, with the request including the temporary UE identity (block 1024). The network entity may then send the verified UE identity and the updated UE location to the third entity (block 1026).

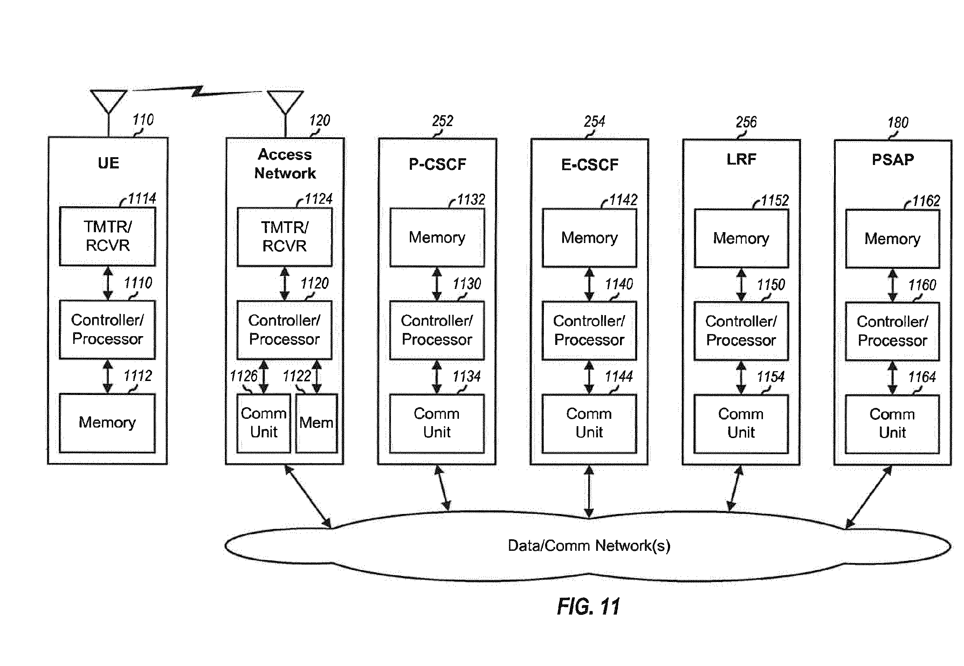

**FIG. 11** shows a block diagram of a design of UE 110, access network 120, P-CSCF 252, E-CSCF 254, LRF 256, and PSAP 180. For simplicity, FIG. 11 shows one controller/processor and one memory for each entity. FIG. 11 also shows one transmitter/receiver (TMTR/RCVR) for UE 110, one transmitter/receiver for access network 120, and one communication (Comm) unit for each network entity. In general, each entity may include any number of controllers, processors, memories, transmitters, receivers, communication units, etc.

On the downlink, base stations in access network 120 transmit traffic data, messages/signaling, and pilot to UEs within their coverage area. These various types of data are processed by a processor 1120 and conditioned by a transmitter 1124 to generate downlink signals, which are transmitted to the UEs. At UE 110, the downlink signals from base stations are received via an antenna, conditioned by a receiver 1114, and processed by a processor 1110 to obtain information for registration, call establishment, etc. Processor 1110 may perform processing for UE 110 in message flow 600 in FIG. 6, processing for process 700 in FIG. 7, etc. Memories 1112 and 1122 store program codes and data for UE 110 and access network 120, respectively.

On the uplink, UE 110 may transmit traffic data, messages/signaling, and pilot to base stations in access network 120. These various types of data are processed by processor 1110 and conditioned by transmitter 1114 to generate an uplink signal, which is transmitted via the UE antenna. At access network 120, the uplink signals from UE 110 and other UEs are received and conditioned by receiver 1124 and further processed by processor 1120 to obtain various types of information, e.g., data, messages/signaling, etc. Access network 120 may communicate with other network entities via communication unit 1126.

Within P-CSCF 252, a processor 1130 performs processing for the P-CSCF, a memory 1132 stores program codes and data for the P-CSCF, and a communication unit 1134 allows the P-CSCF to communicate with other entities. Processor 1130 may perform processing for P-CSCF 252 in message flow 600, processing for process 800 in FIG. 8, etc.

Within E-CSCF 254, a processor 1140 performs processing for the E-CSCF, a memory 1142 stores program codes and data for the E-CSCF, and a communication unit 1144 allows the E-CSCF to communicate with other entities. Processor 1140 may perform processing for E-CSCF 254 in message flow 600, process 900 in FIG. 9, etc.

Within LRF 256, a processor 1150 performs location and/or positioning processing for the LRF, a memory 1152 stores program codes and data for the LRF, and a communication unit 1154 allows the LRF to communicate with other entities. Processor 1150 may perform processing for LRF 256 in message flow 600, process 1000 in FIG. 10, etc.

Within PSAP 180, a processor 1160 performs processing for an emergency call for UE 110, a memory 1162 stores program codes and data for the PSAP, and a communication unit 1164 allows the PSAP to communicate with other entities. Processor 1160 may perform processing for PSAP 180 in message flow 600.

The techniques described herein may be implemented by various means. For example, these techniques may be implemented in hardware, firmware, software, or a combination thereof. For a hardware implementation, the processing units used to perform the techniques at each entity (e.g., UE 110, P-CSCF 252, E-CSCF 254, LRF 256, etc.) may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, a computer, or a combination thereof.

For a firmware and/or software implementation, the techniques may be implemented with modules (e.g., procedures, functions, etc.) that perform the functions described herein. The firmware and/or software instructions may be stored in a memory (e.g., memory 1112, 1122, 1132, 1142 or 1152 in FIG. 11) and executed by a processor (e.g., processor 1110, 1120, 1130, 1140 or 1150). The memory may be implemented within the processor or external to the processor. The firmware and/or software instructions may also be stored in other processor-readable medium such as random access memory (RAM), read-only memory (ROM), non-volatile random access memory (NVRAM), programmable read-only memory (PROM), electrically erasable PROM (EEPROM), FLASH memory, compact disc (CD), magnetic or optical data storage device, etc.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples and designs described herein but is to be accorded the widest scope consistent with the principles and novel features disclosed herein.

The following numbered clauses are hereby included to aid understanding of the invention:
1. An apparatus for a user equipment (UE), comprising:
   at least one processor configured to perform registration with a communication network, to establish a call in parallel with performing registration, and to update the call with information obtained from the registration; and
   a memory coupled to the at least one processor.
2. The apparatus of clause 1, wherein the at least one processor is configured to perform registration for Internet Protocol (IP) Multimedia Subsystem (IMS), and to establish a Voice-over-IP (VoIP) call in parallel with performing registration for IMS.
3. The apparatus of clause 1, wherein the communication network is a visited network, and wherein the at least one processor is configured to perform registration with a home network via the visited network with authentication of the UE to the visited network.
4. The apparatus of clause 1, wherein the information obtained from the registration comprises verified UE identity information.
5. The apparatus of clause 1, wherein the call is an emergency call, and wherein the information obtained from the registration comprises verified identification information, or verified call back information, or both for the UE.
6. The apparatus of clause 1, wherein the at least one processor is configured to receive an indication of support for parallel registration and call establishment, and to establish the call in parallel with performing registration based on the indication.
7. The apparatus of clause 1, wherein the at least one processor is configured to establish an emergency call using a public identity for the UE.
8. The apparatus of clause 1, wherein the at least one processor is configured to instigate association of the established call with the registration by a network entity handling the call.
9. The apparatus of clause 1, wherein the at least one processor is configured to update the call by sending the information obtained from the registration toward a called entity.
10. The apparatus of clause 1, wherein the at least one processor is configured to send a first message to initiate registration, to send a second message to initiate establishment of the call, and to send a third message to update the call with the information obtained from the registration.
11. The apparatus of clause 10, wherein the at least one processor is configured to send the first message and at least one of the second and third messages based on a common source Internet Protocol (IP) address, and to send the second and third messages based on common dialogue information for the call.
12. The apparatus of clause 10, wherein the first message comprises a Session Initiation Protocol (SIP) REGISTER message, the second message comprises a SIP INVITE message, and the third message comprises a SIP re-INVITE message or a SIP UPDATE message.
13. A method comprising:
   performing registration with a communication network;
   establishing a call in parallel with performing registration; and
   updating the call with information obtained from the registration.
14. The method of clause 13, wherein the performing registration comprises performing registration for Internet Protocol (IP) Multimedia Subsystem (IMS), and wherein the establishing a call in parallel with performing registration comprises establishing a Voice-over-IP (VoIP) call in parallel with performing registration for IMS.
15. The method of clause 13, further comprising:
   sending a first message to initiate registration;
   sending a second message to initiate establishment of the call; and
   sending a third message to update the call with the information obtained from the registration.
16. The method of clause 15, wherein the first message and at least one of the second and third messages are sent based on a common source Internet Protocol (IP) address, and wherein the second and third messages are sent based on common dialogue information for the call.
17. An apparatus comprising:
   means for performing registration with a communication network;
   means for establishing a call in parallel with performing registration; and
   means for updating the call with information obtained from the registration.
18. The apparatus of clause 17, wherein the means for performing registration comprises means for performing registration for Internet Protocol (IP) Multimedia Subsystem (IMS), and wherein the means for establishing a call in parallel with performing registration comprises means for establishing a Voice-over-IP (VoIP) call in parallel with performing registration for IMS.
19. The apparatus of clause 17, further comprising:
   means for sending a first message to initiate registration;
   means for sending a second message to initiate establishment of the call; and
   means for sending a third message to update the call with the information obtained from the registration.
20. The apparatus of clause 19, wherein the first message and at least one of the second and third messages are sent based on a common source Internet Protocol (IP) address, and wherein the second and third messages are sent based on common dialogue information for the call.
21. A processor-readable media for storing instructions to:
   perform registration with a communication network;
   establish a call in parallel with performing registration; and
   update the call with information obtained from the registration.
22. The processor-readable media of clause 21, and further for storing instructions to:
   perform registration for Internet Protocol (IP) Multimedia Subsystem (IMS), and
   establish a Voice-over-IP (VoIP) call in parallel with performing registration for IMS.
23. The processor-readable media of clause 21, and further for storing instructions to:
   send a first message to initiate registration;
   send a second message to initiate establishment of the call; and
   send a third message to update the call with the information obtained from the registration.
24. An apparatus for a network entity in a communication network, comprising:
   at least one processor configured to communicate with a user equipment (UE) for registration of the UE in the communication network, to communicate with the UE to establish a call for the UE in parallel with the registration of the UE, and to associate the established call with the registration at the network entity; and
   a memory coupled to the at least one processor.
25. The apparatus of clause 24, wherein the at least one processor is configured to send to the UE an indication of support for parallel registration and call establishment.
26. The apparatus of clause 24, wherein the at least one processor is configured to communicate with the UE to perform registration of the UE for Internet Protocol (IP) Multimedia Subsystem (IMS), and to communicate with the UE to establish a Voice-over-IP (VoIP) call for the UE.
27. The apparatus of clause 24, wherein the at least one processor is configured to communicate with a home network for the UE to authenticate the UE.
28. The apparatus of clause 24, wherein the at least one processor is configured to obtain verified information for the UE from the registration, and to provide the verified information to a second network entity responsible for the established call for the UE.
29. The apparatus of clause 28, wherein the verified information comprises at least one of verified UE identity information and verified call back information.
30. The apparatus of clause 24, wherein the at least one processor is configured to receive from the UE a first message to initiate registration, a second message to initiate establishment of the call, and a third message to update the established call, and to associate of the established call with the registration based on the first, second and third messages.
31. The apparatus of clause 30, wherein the at least one processor is configured to associate the established call with the registration based on a common source Internet Protocol (IP) address in the first message and at least one of the second and third messages and common dialogue information in the second and third messages.
32. The apparatus of clause 30, wherein the first message comprises a Session Initiation Protocol (SIP) REGISTER message, the second message comprises a SIP INVITE message, and the third message comprises a SIP re-INVITE message or a SIP UPDATE message.
33. The apparatus of clause 24, wherein the at least one processor is configured to establish a security association with the UE during the registration, to receive a message from the UE to update the established call, the message being sent using the security association, and to associate the established call with the registration based on use of the security association for the message received from the UE.
34. The apparatus of clause 24, wherein the network entity is a Proxy Call Session Control Function (P-CSCF).
35. A method comprising:
   communicating with a user equipment (UE) for registration of the UE in a communication network;
   communicating with the UE to establish a call for the UE in parallel with the registration of the UE; and
   associating the established call with the registration at a network entity.
36. The method of clause 35, wherein the communicating with the UE for registration comprises communicating with the UE to perform registration of the UE for Internet Protocol (IP) Multimedia Subsystem (IMS), and wherein the communicating with the UE to establish a call comprises communicating with the UE to establish a Voice-over-IP (VoIP) call for the UE.
37. The method of clause 35, wherein the associating the established call with the registration comprises
   receiving from the UE a first message to initiate registration, a second message to initiate establishment of the call, and a third message to update the established call, and
   associating of the established call with the registration based on the first, second and third messages.
38. The method of clause 35, further comprising:
   obtaining verified information for the UE from the registration; and
   providing the verified information to a second network entity responsible for the established call for the UE.
39. An apparatus for a first network entity in a communication network, comprising:
   at least one processor configured to establish a call for a user equipment (UE) based on a temporary identity for the UE, to receive a verified identity of the UE after establishing the call, and to forward the verified identity of the UE to a second network entity; and
   a memory coupled to the at least one processor.
40. The apparatus of clause 39, wherein the at least one processor is configured to receive a first message to initiate establishment of the call, to establish the call for the UE based on the first message, to receive a second message with the verified identity of the UE, and to associate the verified identity of the UE with the established call based on common dialogue information in the first and second messages.
41. The apparatus of clause 39, wherein the call is an emergency call, and wherein the temporary identity for the UE comprises an Emergency Service Query Key (ESQK) or an Emergency Services Routing Key (ESRK).
42. The apparatus of clause 39, wherein the first network entity is an Emergency Call Session Control Function (E-CSCF) and the second network entity is a Location and Routing Function (LRF), and wherein the verified identity of the UE is further forwarded from the LRF to a Public Safety Answering Point (PSAP).
43. A method comprising:
   establishing a call for a user equipment (UE) based on a temporary identity for the UE;
   receiving at a first network entity a verified identity of the UE after establishing the call; and
   forwarding the verified identity of the UE to a second network entity.
44. The method of clause 43, further comprising:
   receiving a first message to initiate establishment of the call;
   receiving a second message with the verified identity of the UE; and
   associating the verified identity of the UE with the established call based on common dialogue information in the first and second messages.
45. An apparatus for a first network entity in a communication network, comprising:
   at least one processor configured to receive a request for location of a user equipment (UE) from a second network entity, to determine the location of the UE, to assign a temporary identity for the UE, to send the temporary identity and the location of the UE to the second network entity, to receive a verified information for the UE from the second network entity, and to associate the verified information with the temporary identity for the UE; and
   a memory coupled to the at least one processor.
46. The apparatus of clause 45, wherein the verified information for the UE comprises verified identity information, or verified call back information, or both for the UE.
47. The apparatus of clause 45, wherein the at least one processor is configured to receive from a third entity a request for updated location of the UE and including the temporary identity for the UE, and to send the verified information and the updated location of the UE to the third entity.
48. The apparatus of clause 47, wherein the first network entity is a Location and Routing Function (LRF), the second network entity is an Emergency Call Session Control Function (E-CSCF), and the third entity is a Public Safety Answering Point (PSAP).
49. The apparatus of clause 45, wherein the call is an emergency call, and wherein the temporary identity for the UE comprises an Emergency Service Query Key (ESQK) or an Emergency Services Routing Key (ESRK).
50. A method comprising:
   receiving at a first network entity a request for location of a user equipment (UE) from a second network entity;
   determining the location of the UE;
   assigning a temporary identity for the UE;
   sending the temporary identity and the location of the UE to the second network entity;
   receiving a verified information for the UE from the second network entity; and
   associating the verified information with the temporary identity for the UE.
51. The method of clause 50, further comprising:
   receiving from a third entity a request for updated location of the UE and including the temporary identity for the UE; and
   sending the verified information and the updated location of the UE to the third entity.

## Claims

1. An apparatus for a first network entity (256) in a communication network, comprising: at least one processor configured to:
i. receive (8) a request for location of a user equipment, UE, (110) from a second network entity (254);
ii. determine (9) the location of the UE;
iii. assign a temporary identity for the UE;
iv. send (10) the temporary identity and the location of the UE to the second network entity (254);
v. receive (16) a verified information for the UE or further UE from the second network entity; and
vi. associate the verified information with the temporary identity for the UE; and
a memory coupled to the at least one processor.

2. The apparatus of claim 1, wherein the verified information for the UE comprises verified identity information, or verified call back information, or both for the UE.

3. The apparatus of claim 1, wherein the at least one processor is configured to receive (19) from a third entity (180) a request for updated location of the UE and including the temporary identity for the UE, and to send (21) the verified information and the updated location of the UE to the third entity (180).

4. The apparatus of claim 3, wherein the first network entity is a Location and Routing Function, LRF, (256) the second network entity is an Emergency Call Session Control Function, E-CSCF (254), and the third entity is a Public Safety Answering Point, PSAP (180).

5. The apparatus of claim 1 wherein the first network entity (256) is further configured to receive (8) from the second network entity (254) a request for location information and/or routing information for the UE (110) and in which the first network entity (256) returns (10) the requested location information and/or routing information to the second network entity (254) and preferably in which the first network entity (256) also returns correlation information identifying the first network entity (256) and a call record for the call stored in the first network entity (256).

6. The apparatus of claim 3 wherein the first network entity (256) is further configured to return (21) to the third network entity (180) call back information received by the first network entity (256) from the second network entity (254).

7. The apparatus of claim 1, wherein the call is an emergency call, and wherein the temporary identity for the UE comprises an Emergency Service Query Key, ESQK, or an Emergency Services Routing Key, ESRK.

8. The apparatus of claim 1 in which the temporary identity comprises unverified identification information associated with the UE.

9. The apparatus of claim 1 wherein the first network entity (256) is further configured to receive (8) from the second network entity (254) the request for location information for the User Equipment (254) by receiving temporary identity information associated with the UE from the second network entity (254).

10. The apparatus of claim 4 wherein if the LRF (256) receives (19) the updated location request from the PSAP (180) before receiving the verified UE identity and call back information (15, 16), then the LRF (256) waits until it receives the verified information before sending (21) the requested information to the PSAP (180).

11. The apparatus of claim 4 wherein if the LRF (256) has already received the verified UE identity and call back information from the E-CSCF (254) when the location request is received from the PSAP (180), then LRF (256) returns (21) the verified information to the PSAP (180) without obtaining (20) the UE location or without waiting for the procedure to obtain an initial or updated location to complete.

12. The apparatus of claim 1 wherein the first network entity (256) is part of a visited network (130) for serving the UE (110) subscribed to a home network (160).

13. The apparatus of claim 1 wherein the first network entity (256) is further configured to determine whether location request comprises dialogue parameters which are the same as the dialogue parameters associated with the received verified information and preferably in which the processor is configured to determine whether the location request and received verified information are associated with the same User Equipment or wherein the processor is configured to determine whether the first and second messages are associated with the same User Equipment, and preferably, in which the user equipment is only associated with the established call if the first and second messages are associated with the same UE.

14. A method comprising:
receiving at a first network entity a request for location of a user equipment (UE) from a second network entity;
determining the location of the UE;
assigning a temporary identity for the UE;
sending the temporary identity and the location of the UE to the second network entity;
receiving a verified information for the UE from the second network entity; and
associating the verified information with the temporary identity for the UE.

15. The method of claim 14, further comprising:
receiving from a third entity a request for updated location of the UE and including the temporary identity for the UE; and
sending the verified information and the updated location of the UE to the third entity
